(19) **Europäisches Patentamt**

**European Patent Office**

**Office européen des brevets**

(11) Numéro de publication: **0 511 037 B1**

(12) **FASCICULE DE BREVET EUROPEEN**

(45) Date de publication de fascicule du brevet: **07.09.94** (51) Int. Cl.⁵: **C11D 3/37**

(21) Numéro de dépôt: **92400875.8**

(22) Date de dépôt: **30.03.92**

---

(54) **Composition détergente contenant un biopolymère polyimide hydrolysable en milieu lessiviel.**

---

(30) Priorité: **15.04.91 FR 9104566**

(43) Date de publication de la demande:
**28.10.92 Bulletin 92/44**

(45) Mention de la délivrance du brevet:
**07.09.94 Bulletin 94/36**

(84) Etats contractants désignés:
**AT BE CH DE DK ES FR GB GR IT LI LU NL PT SE**

(56) Documents cités:
**WO-A-87/03891       DE-A- 3 724 460**
**GB-A- 1 404 814      US-A- 3 052 655**
**US-A- 3 846 380      US-A- 4 440 625**
**US-A- 4 696 981**

(73) Titulaire: **RHONE-POULENC CHIMIE**
**25, quai Paul Doumer**
**F-92408 Courbevoie Cédex (FR)**

(72) Inventeur: **Ponce, Arnaud**
**13 rue des Noyers**
**F-93300 Aubervilliers (FR)**
Inventeur: **Tournilhac, Florence**
**84, Avenue Ledru Roland**
**F-75012 Paris (FR)**

(74) Mandataire: **Seugnet, Jean Louis et al**
**RHONE-POULENC CHIMIE**
**Direction de la Propriété Industrielle**
**25, Ouai Paul Doumer**
**F-92408 Courbevoie Cedex (FR)**

---

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

La présente invention a pour objet une composition détergente contenant un polyimide biopolymère susceptible d'engendrer par hydrolyse au sein d'un milieu lessiviel un "builder" polypeptidique biodégradable ; cette composition peut être utilisée pour la formulation de lessives ou de produits de nettoyage en poudre.

On entend par "builder" tout constituant qui améliore les performances des agents de surface d'une composition détergente. D'une manière générale un "builder" a de multiples fonctions :

- il assure au sein d'un milieu lessiviel l'enlèvement des ions indésirables, notamment alcalino-terreux (calcium, magnésium), par séquestration ou précipitation, pour prévenir la précipitation des tensio-actifs anioniques,
- il apporte une réserve d'alcalinité et de force ionique,
- il maintient en suspension les salissures extraites,
- il empêche les incrustations minérales du linge observées en cours de lavage.

Pendant très longtemps, les tripolyphosphates ont été les "builders" les plus fréquemment utilisés dans les compositions détergentes et les produits de lavage. Cependant ils sont en partie responsables de l'eutrophisation des lacs et des eaux a écoulement lent lorsqu'ils ne sont pas suffisamment éliminés par les stations d'épuration des eaux : aussi cherche t-on à les remplacer partiellement ou totalement.

Les zéolithes seules ne peuvent remplacer les tripolyphosphates ; elles doivent être renforcées dans leur action par d'autres additifs.

Des copolymères d'acide acrylique et d'anhydride maléique (ou leurs sels alcalins ou d'ammonium) ont été proposés (EP-A-25.551) comme inhibiteurs d'incrustation. Ils présentent toutefois l'inconvénient de ne pas être biodégradables en milieu naturel.

- DE-A-3 724 460 décrit l'utilisation d'un biopolymère polypeptidique et non pas polyimide dans les compositions détergentes liquides,
- US-A-4 696 981 décrit les biopolymères polyimides dérivés de la polycondensation d'aminodiacides qui sont hydrolysés facilement dans un milieu aqueux alcalin,
- WO-A-8 703 891 décrit la propriété de séquestrer des ions calcium pour des dérivés de l'acide polyaspartique et/ou polyglutamique et leur utilisation pour la préparation de médicament.

La demanderesse a maintenant trouvé une composition détergente présentant d'excellentes propriétés de détergence primaire et secondaire, composition dont l'un des constituants est un biopolymère polyimide susceptible d'engendrer, par hydrolyse au sein d'un milieu lessiviel, un "builder" au moins partiellement biodégradable.

Par composition détergente, on désigne selon l'invention les lessives lave-linge, les lessives lave-vaisselle ou tout autre produit de lavage à usage ménager.

On entend par "bain lessiviel" ou "milieu lessiviel" la solution aqueuse de lessive (composition détergente) présente dans la machine à laver au cours des cycles de lavage ; la quantité de lessive présente est celle préconisée par le fabricant : celle-ci est généralement inférieure à 20 g/litre ; le pH d'une telle solution est supérieur à 9.

Selon l'invention, il s'agit d'une composition détergente renfermant un polymère et un tensio-actif, caractérisée en ce que ledit polymère est un biopolymère polyimide présentant une densité de charge pouvant aller de 0 à $5.10^{-4}$ mole/g de polymère et susceptible d'engendrer par hydrolyse au sein d'un milieu lessiviel basique un builder polypeptidique au moins partiellement biodégradable susceptible d'acquérir une densité de charge $COO^-$ au moins égale à $10^{-3}$ mole/g de polymère.

La présente invention vise également l'utilisation, dans les compositions détergente en poudre, d'un biopolymère polyimide présentant une densité de charge $COO^-$ pouvant aller de 0 à $5.10^{-4}$ mole/g de polymère et susceptible d'engendrer par hydrolyse au sein d'un milieu lessiviel basique un composant builder polypeptidique au moins partiellement biodégradable.

A titre d'exemple de biopolymères polyimides pouvant être mis en oeuvre, on peut citer les polyimides dérivés de la polycondensation d'aminoacides, notamment de l'acide aspartique ou glutamique ou des précurseurs desdits aminoacides ; ces polymères se dissolvent dans l'eau à pH basique avec formation de fonctions $COO^-$ libres.

Ces polymères peuvent être aussi bien des homopolymères dérivés de l'acide aspartique ou glutamique, que des copolymères dérivés de l'acide aspartique et de l'acide glutamique en proportions quelconques, ou des copolymères dérivés de l'acide aspartique et/ou glutamique et d'aminoacides autres (par exemple jusqu'à 15 % en poids, de préférence moins de 5 % en poids, d'aminoacides autres).

Parmi les aminoacides copolymérisables, on peut citer la glycine, l'alanine, la valine, la leucine, l'isoleucine, la phenylalanine, la méthionine, le tryptophane, l'histidine, la proline, la lysine, l'arginine, la

2

serine, la thréonine, la cystéine...

Lesdits biopolymères polyimides peuvent présenter une masse moléculaire moyenne en poids de l'ordre de 2000 à $10^7$ et généralement de l'ordre de 3.500 à 60.000.

Ceux-ci, notamment les polyimides dérivés de l'acide aspartique ou glutamique peuvent être préparés notamment par thermocondensation du ou desdits aminoacides en milieu sensiblement anhydre, comme décrit dans J.A.C.S, 80, 3361 (1958), J.Med.Chem. 16, 893 (1973), Polymer 23, 1237 (1982) ou dans le brevet américain n°3.052.655.

Lesdits polyimides présentent de préférence une densité de charge $COO^-$ nulle ; ils peuvent toutefois être partiellement hydrolysé (par ouverture de quelques cycles imides avec formation de carboxylates alcalins ou d'ammonium), la densité de charge $COO^-$ devant toutefois être inférieure à $5 \times 10^{-4}$ mole/g de polymère.

La quantité de biopolymère polyimide entrant dans la composition détergente faisant l'objet de l'invention peut aller de 0,2 à 80 % de préférence de 2 à 5 % du poids de ladite composition détergente.

A coté du biopolymère polyimide, est présent, dans la composition détergente, un agent tensio-actif, en quantité pouvant aller de 2 à 50 %, de préférence de 6 à 30 % du poids de ladite composition détergente.

Parmi les agents tensio-actifs entrant dans la composition détergente faisant l'objet de l'invention, on peut citer:

- les agents tensio-actifs anioniques du type savons de métaux alcalins (sels alcalins d'acides gras en $C_8$ - $C_{24}$), sulfonates alcalins (alcoylbenzène sulfonates en $C_8$ - $C_{13}$, alcoylsulfonates en $C_{12}$ - $C_{16}$, alcools gras en $C_6$ - $C_{16}$ oxyéthylénés et sulfatés, alkylphénols en $C_8$ - $C_{13}$ oxyéthylénés et sulfatés), les sulfosuccinates alcalins (alcoylsulfosuccinates en $C_{12}$ - $C_{16}$)...
- les agents tensio-actifs non ioniques du type alcoylphénols en $C_6$ - $C_{12}$ polyoxyéthylénés, alcools aliphatiques en $C_8$ - $C_{22}$ oxyéthylénés, les copolymères bloc oxyde d'éthylène - oxyde de propylène, les amides carboxyliques éventuellement polyoxyéthylénés,
- les agents tensio-actifs amphotères du type alcoyldiméthylbétaïnes,
- les agents tensio-actifs cationiques du type chlorures ou bromures d'alkyltriméthylammonium, d'alkyldiméthyléthylammonium. Divers constituants peuvent en outre être présents dans la composition détergente de l'invention afin d'obtenir des lessives ou des produits de nettoyage en poudre.

Peuvent ainsi être en outre présents dans la composition détergente ci-dessus décrite :
- des "builders" du type :
  . phosphates à raison de moins de 25 % du poids total de formulation,
  . zéolithes jusqu'à environ 40 % du poids total de formulation,
  . carbonate de sodium jusqu'à environ 80 % du poids total de formulation,
  . acide nitriloacétique jusqu'à environ 10 % du poids total de formulation,
  . acide citrique, acide tartrique jusqu'à environ 20 % du poids total de formulation, la quantité totale de "builder" (polyimide précurseur de builder + autres builders) correspondant à environ 0,2 à 80 %, de préférence de 20 à 45 % du poids total de ladite composition détergente,
- des inhibiteurs de corrosion tels que les silicates jusqu'à environ 25 % du poids total de ladite composition détergente,
- des agents de blanchiment du type perborates, chloroisocyanates, N, N, N', N'-tétraacétyléthylènediamine (TAED) jusqu'à environ 30 % du poids total de ladite composition détergente,
- des agents anti-rédéposition du type carboxyméthylcellulose, méthylcellulose en quantités pouvant aller jusqu'à environ 5 % du poids total de ladite composition détergente,
- des agents anti-incrustation du type copolymères d'acide acrylique et d'anhydride maléïque en quantité pouvant aller jusqu'à 10 % environ du poids total de ladite composition détergente,
- des charges du type sulfate de sodium pour les détergents en poudre en quantité pouvant aller jusqu'à 50 % du poids total de ladite composition détergente.

La composition détergente faisant l'objet de l'invention présente une bonne efficacité que ce soit en détergence primaire ou en détergence secondaire. En outre, l'incorporation d'un polyimide qui n'est hydrolysable qu'au sein du milieu lessiviel, garantit à la composition détergente une stabilité, au stockage, supérieure à celle d'une composition contenant directement le polypeptide biodégradable.

Les exemples et figures suivants sont donnés à titre indicatif et ne peuvent être considérés comme une limite du domaine et de l'esprit de l'invention.

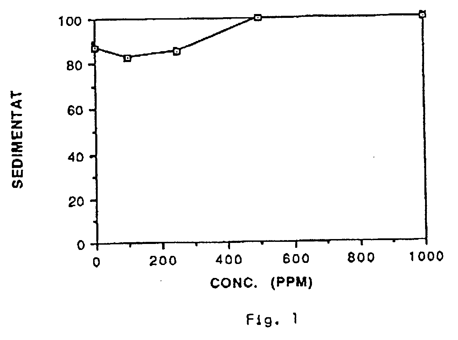

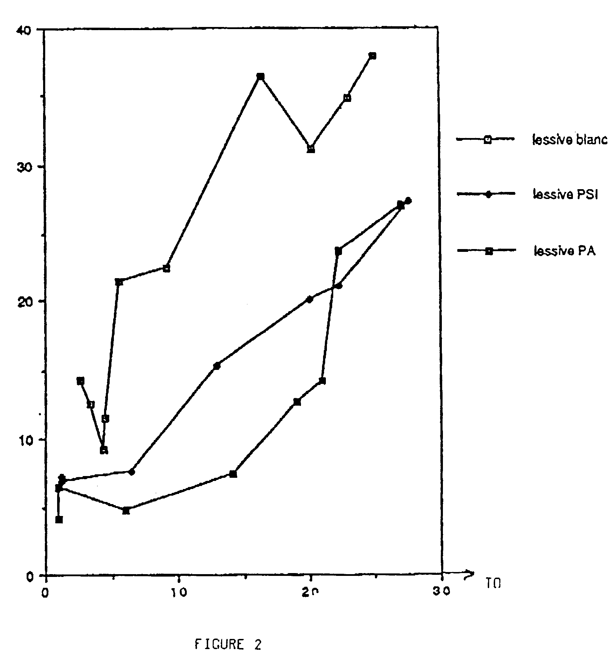

La figure 1 représente la variation du niveau d'un sédimentat de carbonate de calcium en fonction de la concentration en polymère. La figure 2 représente la variation du phénomène "filming" en fonction de la dureté de l'eau en présence ou non d'une composition selon l'invention.

EXEMPLE 1

Synthèse d'un polysuccinimide dérivé de l'acide aspartique

L'appareillage est constitué d'un ballon de réaction d'un litre, chauffé dans un bain d'huile, ledit ballon de réaction étant surmonté d'une colonne de distillation, elle même raccordée à un ballon de récupération refroidi à température ambiante (montage de distillation).

On introduit 250 g d'acide L aspartique dans le ballon de réaction. On purge à l'azote ; la pression est abaissée à 8 x 10³ Pa ; le ballon de récupération est maintenu à 20°C pendant que l'on chauffe le milieu réactionnel à 220°C pendant 6 H 30 ; l'eau résultante est recueillie dans le ballon de récupération à 20°C.

On récupère 182,2 g d'une poudre qui est un polysuccinimide (spectrométrie IR), dont la masse moléculaire moyenne en nombre Mn = 2 450 (mesure de viscosité dans la NaOH 0,5 N) et ne présentant aucune charge anionique.

Exemple 2

Formulation d'une composition détergente lave-linge à partir du polysuccinimide de l'exemple 1.

A la poudre, préparée en exemple 1, sont introduits par mélange à sec différents additifs afin d'obtenir la composition détergente (lessive) suivante :

| Composition de la lessive | % en poids |
|---|---|
| - alkylbenzène sulfonate linéaire | 7,5 |
| - CEMUSOL LA 90®(acide laurique polyoxyéthylénée commercialisé par S.F.O.S) | 4 |
| - zéolithe 4 A | 24 |
| - Silicate de Na ($SiO_2/Na_2O = 2$) | 1,5 |
| - carbonate de Na | 10 |
| - TAED | 2 |
| - perborate de Na | 15 |
| - éthylénediamine tétracétique | 0,1 |
| - polysuccinimide ci-dessus préparé | 3 |
| - Tinopal DMSX® | 0,1 |
| - Tinopal SOP® (azurants commercialisés par CIBA-CEIGY) | 0,1 |
| - antimousse siliconé | 0,2 |
| - alcalaze | 0,15 |
| - savinaze (enzymes) | 0,15 |
| - sulfate de Na | qsp 100 % |

On appellera "lessive témoin" une lessive de composition ci-dessus mais ne contenant pas de polysuccinimide.

Les performances de cette lessive ont été testées en détergence primaire et secondaires. Elles sont explicitées dans les exemples suivants.

EXEMPLE 3

Performance en détergence primaire de la lessive lave-linge de l'exemple 2

Les effets "primaires" de détergence sont relatifs à l'élimination des souillures ou des taches, et s'observent après un seul lavage.

On procède à des lavages de linge, dans des conditions les plus proches possibles de la réalité, grâce à l'utilisation d'un appareil ménager à tambour de marque AEG®.

Une charge de linge de 5 Kg constituée d'un mélange de torchons et de serviettes éponges, sert de support à des éprouvettes témoins qui sont cousues sur les torchons.

Ces éprouvettes sont des tissus salis de manière standard et fournis par des laboratoires spécialisés.

Il s'agit de 5 éprouvettes (10 cm x 10 cm) de chacun des trois tissus suivants :

| | |
|---|---|
| - coton sali EMPA 101® (St-Gall) | (1) |
| - polyester-coton sali EMPA 104 (St-Gall)® | (2) |
| - coton sali TNO | (3) |

On mesure la reflectance de ces tissus (avant que ceux-ci soient cousus) à l'aide d'un reflectomètre XENOCOLOR® (commercialisé par Dr.LANGE), selon les 3 coordonnées trichromatiques Y, L, E.

On effectue le lavage à 75°C, en introduisant 120 g de lessive à tester dans le godet de la machine (concentration en lessive de 8 g/l).

Après séchage du linge, on découd toutes les éprouvettes initialement salies et on mesure à nouveau leurs coordonnées Y, L, E.

Les écarts ΔY, ΔL, ΔE avec les valeurs initiales indiquent les performances de détergence de la lessive sur les diverses salissures ; les écarts observés sont directement proportionnels à l'effet détergence de la lessive testée.

Les résultats de détergence primaire sont donnés au tableau I.

TABLEAU I

| | Reflectance | |
|---|---|---|
| Tissu | Lessive Témoin | Lessive de l'exemple 1 |
| (1) | ΔY = 23,8<br>ΔL = 23,2<br>ΔE = 23,7 | ΔY = 26,6<br>ΔL = 26,0<br>ΔE = 26,5 |
| (2) | ΔY = 25,9<br>ΔL = 25,6<br>ΔE = 25,8 | ΔY = 27,8<br>ΔL = 27,8<br>ΔE = 28,0 |
| (3) | ΔY = 18,8<br>ΔL = 19,7<br>ΔE = 20,1 | ΔY = 21,3<br>ΔL = 22,4<br>ΔE = 23,3 |

Exemple 4

Performance en détergence secondaire de la lessive lave-linge de l'exemple 2

Les effets "secondaires" de détergence s'observent après un cumul de plusieurs lavages ; ces effets sont définis par la "redéposition" des souillures sur les tissus initialement propres, et par l'"incrustation" des précipités qui peuvent se produire durant le lavage, sur ces mêmes tissus.

Effet antiredéposition

Cet effet est mesuré sur 5 éprouvettes (10 cm x 10 cm) de chacun des tissus non salis suivants :

| | |
|---|---|
| - textile coton Testfabric 405 | (4) |
| - Coton Krefeld 10 A | (5) |
| - torchon mixte lin/coton | (6) |
| - polyester blanc DACRON® | (7) |

Ces éprouvettes non salies sont lavées comme à l'exemple 2 en présence des éprouvettes salies de l'exemple 2, et ce 5 fois dans les mêmes conditions.

Après chaque lavage, les éprouvettes non salies ne sont pas décousues. On remplace les éprouvettes salies lavées par d'autres éprouvettes salies, qui constituent ainsi une nouvelle source de souillure pour le lavage suivant, que l'on réalise à nouveau dans les mêmes conditions.

L'opération est répétée cinq fois, et à la suite de ces cinq lavages cumulés, on découd après séchage les éprouvettes initialement propres.

On mesure alors les Y, L, E des éprouvettes (4) à (7) initialement propres ; les $\Delta Y$, $\Delta L$, $\Delta E$ obtenus donnent la "redéposition" ou le "grisaillement" cumulé après 5 lavages.

Les résultats obtenus Figurent au tableau II.

Les écarts de reflectance doivent être les plus faibles possibles.

TABLEAU II

| Reflectance | | |
|---|---|---|
| Tissu | Lessive Témoin | Lessive de l'exemple 1 |
| (4) | $\Delta Y$ = - 3,5 <br> $\Delta L$ = - 1,9 <br> $\Delta E$ = + 2,4 | $\Delta Y$ = - 2,7 <br> $\Delta L$ = - 1,5 <br> $\Delta E$ = + 2,1 |
| (5) | $\Delta Y$ = - 3,9 <br> $\Delta L$ = - 2,1 <br> $\Delta E$ = + 2,6 | $\Delta Y$ = - 2,8 <br> $\Delta L$ = - 1,5 <br> $\Delta E$ = + 2,1 |
| (6) | $\Delta Y$ = - 3,3 <br> $\Delta L$ = - 1,9 <br> $\Delta E$ = + 2,8 | $\Delta Y$ = - 2,7 <br> $\Delta L$ = - 1,5 <br> $\Delta E$ = + 2 |
| (7) | $\Delta Y$ = - 13,0 <br> $\Delta L$ = - 7,6 <br> qE = + 10,5 | $\Delta Y$ = - 10,5 <br> $\Delta L$ = - 6,1 <br> $\Delta E$ = + 9,3 |

Effet inhibiteur d'incrustation

Cet effet a été mesuré après 20 lavages en l'absence de tissus salis sur les éprouvettes non salies suivantes :

. textiles coton Testfabric 405 (4)

. coton Krefeld 12A (8)

L'incrustation minérale est calculée à partir du taux de cendres (en % par rapport au poids total du coton) des tissus lavés, séchés et brulés à 950°C pendant 3 heures.

L'effet inhibiteur d'incrustation est apprécié par le rapport taux de cendres avec additifs/taux de cendres sans additif qui figure sous la lettre T dans le tableau III ci après.

TABLEAU III

| Tissu | Taux de Cendres % | | |
|---|---|---|---|
| | lessive témoin | lessive de l'exemple 2 | T |
| (4) | 3,7 % | 2,4 % | 65 % |
| (8) | 4,1 % | 1,1 % | 26 % |

Exemple 5

Cet exemple met en évidence la capacité de séquestration des ions calcium du polysuccinimide de l'exemple 1 après hydrolyse in situ en acide polyaspartique en milieu basique.

La capacité de séquestration des ions calcium est mesurée à l'aide d'une électrode présentant une membrane sélective perméable aux ions calcium.

On trace d'abord une courbe d'étalonnage en mettant en oeuvre 100 ml d'une solution de chlorure de sodium à 3g/l de pH 10,5 dans laquelle on ajoute des quantités d'ions calcium variant de $10^{-5}$ à $3 \times 10^{-3}$ mole/l et on trace la courbe potentiel délivré par l'électrode en fonction de la concentration en ions $Ca^{2+}$

libres

On hydrolyse le polysuccinimide de l'exemple 1 par une solution de soude concentrée jusqu'à obtenir une solution à 20 % en poids de polyaspartate de sodium de pH = 10,5. La solution obtenue est appelée "hydrolysat".

On dilue cette solution jusqu'à obtenir 100 g de solution aqueuse à 10 g/l de polyaspartate ; on ajuste le pH à 10,5 par une solution de soude concentrée. On ajoute 0,3 g de chlorure de sodium en poudre.

On trace la droite $[Ca^{2+}]$libre/ $[Ca^{2+}]$ fixé = f $([Ca^{2+}]$ libre) A partir de cette droite on détermine:
- la constante de complexation K des ions calcium du polymère
- le nombre So de sites de complexation du polymère

$$\text{définis par : } \frac{[Ca^{2+}] \text{ libre}}{[Ca^{2+}] \text{ fixé}} = \frac{1}{KSo} + \frac{1}{So} [Ca^{2+}] \text{ libre}$$

Selon cette méthode d'évaluation, on constate que l'acide polyaspartique obtenu par hydrolyse du polysuccinimide de l'exemple 1 présente $2,5 \times 10^{-3}$ site/g de polymère, dont l'affinité est Log K = 3,5.

Exemple 6

Cet exemple met en évidence la capacité du polysuccinimide de l'exemple 1 à disperser du carbonate de calcium, après hydrolyse in situ en acide aspartique en milieu basique.

Dans une éprouvette de 100 $cm^3$ (hauteur 26 cm; diamètre 3 cm), 2 g de carbonate de calcium de précipitation sont dispersés dans 100 ml d'une solution aqueuse de pH 10,5 (NaOH) contenant 3g/l de NaCl, $3 \times 10^{-3}$ mole/l de $CaCl_2$ et l'hydrolysat comme préparé à l'exemple 4, à différentes concentrations.

On mesure le niveau du sédimentat en $cm^3$ au bout de 10 mn et on trace la courbe niveau de sédimentat en fonction de la concentration en ppm du polymère (exprimé en sec).

La courbe de la figure 1 montre d'abord un phénomène de floculation (taux de couverture trop faible des particules par le polymère) puis restabilisation.

Cette capacité de stabilisation des particules minérales est particulièrement intéressante puisqu'il est connu que ces dernières sont à l'origine des phénomènes d'incrustation dûs aux dépots qui s'accumulent sur le coton.

Exemple 7

Cet exemple met en évidence la capacité du polysuccinimide de l'exemple I à disperser du noir de carbone et de l'oxyde de fer (particules rencontrées dans les salissures les plus courantes) après hydrolyse in situ en acide polyaspartique en milieu basique.

1 % en poids de noir de carbone ou d'oxyde de fer III est introduit dans une solution aqueuse de pH 10,5 (NaOH) contenant 3g/l de NaCl, $3 \times 10^{-3}$ mole/l de $CaCl_2$ et 1 000 ppm de l'hydrolysat (exprimé en sec) comme préparé à l'exemple 4.

On constate que les suspensions obtenues sont stables dans le temps.

En l'absence de polymère celles-ci décantent en moins de 10 minutes.

Cette capacité de stabilisation du noir de carbone et de l'oxyde de fer III est intéressante puisqu'il est connu que le phénomène de redéposition est la conséquence du mauvais maintien de ce type de salissures en suspension dans le bain lessiviel.

Exemple 8

Cet exemple met en évidence la propriété du succinimide de l'exemple 1 à inhiber la cristallisation du carbonate de calcium, après hydrolyse in situ en acide polyaspartique en milieu basique.

La propriété d'inhibition de cristallisation du carbonate de calcium de ce produit est mise en évidence en utilisant la méthode décrite par Z. Amjad dans Langmuir 1987, 3, 224-228.

La mesure est réalisée dans une cellule fermée thermostatée à l'aide d'une solution sursaturée à $10^{-3}$ mole/l de bicarbonate de sodium et à $2 \times 10^{-3}$ mole/l de chlorure de calcium (pH = 8,6), à laquelle on ajoute 5g/l de carbonate de calcium de synthèse (surface spécifique = 80 $m^2$/g; diamètre théorique = 20 nm); on mesure la diminution de la vitesse de cristallisation du carbonate de calcium obtenue par addition de 500 ppm de l'hydrolysat (exprimé en sec) comme préparé à l'exemple 4. Les résultats sont les suivants :

|  | Sans polymère | Avec polymère |
|---|---|---|
| Vitesse de cristallisation en mole/l.s. | $5 \times 10^{-7}$ | $4,5 \times 10^{-8}$ |

## EXEMPLE 9

Cet exemple a pour but de mesurer la biodégradabilité de l'acide polyaspartique obtenu après hydrolyse in situ du polysuccinimide en milieu basique.

La biodégrabilité "ultime" de l'hydrolysat comme préparé à l'exemple 5 est mesurée selon la norme AFNOR T90-312 ( en conformité avec la norme internationale ISO 7827)

le test est réalisé à partir:

- d'un inoculum obtenu par filtration d'eau d'entrée de la station d'épuration urbaine de Saint Germain au Mont d'Or (Rhône).
- d'un milieu d'essai contenant $4 \times 10^7$ bactéries/ml
- d'une quantité de produit à tester telle que le milieu d'essai

contienne une concentration en carbone organique de l'ordre de 40 mg/l. Le taux de biodégradabilité du produit testé en fonction du temps est de 75 % en 28 jours dans les conditions de rejet en eau de rivière.

Les exemples ci-dessus montrent bien tous les avantages de l'utilisation dans les compositions détergentes du polysuccinimide de l'exemple 1, à savoir :

- ses effets de détergence primaire et secondaire
- l'effet "builder" constaté suite à son hydrolyse in situ en milieu basique
- la biodégradabilité très élevée de polyanion issu du bain lessiviel, en sortie de machine.

## Exemple 10

### Formulation de compositions détergentes lave-vaisselle à partir du polysuccinimide de l'exemple 1

le tableau IV ci-après rend compte de la composition de deux lessives lave-vaiselle C et D incorporant le polysuccinimide et d'une lessive témoin B sans polysuccinimide.

TABLEAU IV

|  | Formule B | Formule C | Formule D |
|---|---|---|---|
| $Na_2CO_3$ | 60 % | 60 % | 60 % |
| DISILICATE | 28 % | 28 % | 28 % |
| PERBORATE TETRA | 6 % | 6 % | 6 % |
| TENSIO-ACTIF | 1 % | 1 % | 1 % |
| SULFATE | 5 % | 0 % | 0 % |
| POLYMERE | 0 % | PSI : 5 % | PA : 5 % |
| PSI : Polysuccinimide | | | |
| PA : Polyacrylate de sodium M = 2100 g/mole | | | |
| Tensioactif : Pluronic L 64® | | | |

Les mélanges ont été préparés par mélange à sec au Lödige. Toutes les poudres ont été incorporées puis mélangées pendant environ 5 minutes. Le tensioactif est alors coulé lentement dans le mélange par l'intermédiaire d'une ampoule à décanter. La lessive obtenue est fluide et ne motte pas. Sa densité est de 1,05 g/cm$^3$ et le pH d'une solution de lessive à 10 % est de 11.

La formule choisie est volontairement une formule qui dépose un voile important sur les plaques. Ceci est dû à la présence massive de carbonates et à l'absence de complexants comme le citrate.

Exemple 11 :

Evaluation de la capacité "antifilming" des compositions détergentes lave-vaisselle de l'exemple 10.

Outre le lavage proprement dit, c'est à dire l'élimination des souillures déposées sur les instruments de cuisson ou d'alimentation, c'est certainement l'aspect des verres qui sensibilise le plus l'utilisateur. la qualité du rinçage et du séchage sont alors prépondérants. Il est d'usage d'utiliser le terme "filming" ou de spoting pour caractériser ces défauts d'aspect.

Les expériences ont été effectuées dans un Lave-vaiselle automatique MIELE G 560® possédant un programme court à 65°C avec un dernier rinçage chaud et un séchage. La durée totale du cycle est d'environ 50 minutes. Aucun produit de rinçage n'a été utilisé.

On procéde alors à un enchainement de lavages/séchages cumulés sur une série de 10 plaques en verre de 20 cm X 20 cm. Initialement, la verrerie est propre et sans défaut. Au départ l'adoucisseur incorporé dans la machine est parfaitement régénéré.

Durant les premiers lavages, la dureté de l'eau est faible et n'évolue pas en fonction du nombre de lavages cumulés. Puis, lorsque l'adoucisseur d'eau arrive en fin de fonctionnememt, la dureté de l'eau croit et un film commence à apparaitre sur les plaques de verre. Au cours des lavages, on suit la dureté de l'eau de rinçage, et l'évolution de la transparence des plaques de verre.

L'aspect de la verrerie est mesuré tous les 2 lavages à l'aide d'un spectromètre GARDNER® en superposant une plaque noire à la plaque de verre à mesurer. De cette façon, l'augmentation de l'opacité du voile est suivie par le paramètre L mesuré au GARDNER®. Plus L est élevé, plus le voile est important. 20 mesures sont effectuées sur chaque plaque.

A l'issue de ces mesures, on porte sur un graphique la valeur de L en fonction de la dureté de l'eau.

On procéde à 2 essais préliminaires : un premier essai sans lessive, ce qui permet d'appréhender l'effet de l'eau seule sur le filming. Le deuxième essai porte sur une lessive sans polymère. La concentration en lessive est de 5 g/l (50 g pour une quantité d'eau de 10 litres au lavage). Les résultats sont présentés sur la figure 2.

Exemple 12 :

Préparation d'un polyimide dérivant d'un copolymère acide aspartique-acide glutamique.

On place dans une étuve à balayage d'azote un bécher en acier inoxydable contenant 285g d'acide aspartique et 315g d'acide glutamique, ce qui correspond à 600g d'un mélange équimolaire. On chauffe à 175°C pendant environ 22 h.

Puis le polymère est refroidi à l'aide de carboglace. Il est broyé à l'ultraturax® en suspension dans 2,5 l d'eau.

Il est ensuite lavé 3 fois avec 2,5 l d'eau, puis une fois dans 0,5 l d'éthanol.

Après séchage à l'étuve, on obtient 213 g de copolymère.

Exemple 13 :

L'hydrolysat du polyimide de l'exemple 12 est testé pour sa capacité de sequestration des ions calcium, son pouvoir de dispersant du carbonate de calcium et son pouvoir inhibiteur de croissance selon les protocoles respectivement décrits en exemples 5, 6 et 8.

Le tableau V ci-après rend compte des résultats.

TABLEAU V

| | So mM/g | Log K | Pouvoir dispersant ppm | vitesse de cristallisation (moles /l.s) |
|---|---|---|---|---|
| Exemple 12 | 1,8 | 3,2 | 250 ppm | $1,3 \times 10^{-8}$ |

Exemple 14 :

Conformément au mode opératoire décrit en exemple 2, une composition détergente lave-linge est préparée à partir du polyimide de l'exemple 12. Les effets inhibiteurs d'incrustations de cette lessive, testée selon le protocole décrit en exemple 4 sont comme suit :

| Tissus | T |
|--------|------|
| (4) | 30 % |
| (8) | 29 % |

**Revendications**

1. Composition détergente renfermant un polymère et un tensio-actif, caractérisée en ce que ledit polymère est un biopolymère polyimide présentant une densité de charge pouvant aller de 0 à $5.10^{-4}$ mole/g de polymère et susceptible d'engendrer par hydrolyse au sein d'un milieu lessiviel basique un builder polypeptidique au moins partiellement biodégradable susceptible d'acquérir une densité de charge $COO^{-}$ au moins égale à $10^{-3}$ mole/g de polymère.

2. Composition détergente selon la revendication 1) caractérisée en ce que ledit biopolymère polyimide dérive de la polycondensation d'aminoacides ou des précurseurs desdits aminoacides.

3. Composition détergente selon la revendication 1 ou 2) caractérisée en ce que ledit biopolymère polyimide dérive de la polycondensation de l'acide aspartique et/ou de l'acide glutamique ou des précurseurs dudit ou desdits acide(s).

4. Composition détergente selon l'une quelconque des revendications 1 à 3 caractérisée en ce que ledit biopolymère polyimide présente une masse moléculaire moyenne en poids de l'ordre de 2000 à $10^7$.

5. Composition détergente selon la revendication 4 caractérisée en ce que ledit biopolymère polyimide présente une masse moléculaire moyenne en poids de l'ordre de 3.500 à 60.000.

6. Composition détergente selon l'une quelconque des revendications 1 à 5 caractérisée en ce que ledit biopolymère polyimide représente de 0,2 à 80 % du poids de ladite composition détergente.

7. Composition détergente selon la revendication 6 caractérisée en ce que ledit biopolymère polyimide représente de 2 à 5 % du poids de ladite composition détergente.

8. Composition détergente selon l'une quelconque des revendications 1 à 7 caractérisée en ce que l'agent tensio-actif est présent en quantité allant de 2 à 50 % du poids de ladite composition.

9. Utilisation, dans les compositions détergentes en poudre, d'un biopolymère polyimide présentant une densité de charge $COO^{-}$ pouvant aller de 0 à $51\ 10^{-4}$ mole/g de polymère et susceptible d'acquérir par hydrolyse dans un milieu lessiviel basique une densité de charge $COO^{-}$ au moins égale à $10^{-3}$ mole/g de polymère, comme substance géneratrice d'un composant builder polypeptidique au moins partiellement biodégradable.

10. Utilisation selon la revendication 9 caractérisée en ce que ledit biopolymère polyimide dérive de la polycondensation d'aminodiacides ou des précurseurs desdits aminodiacides.

11. Utilisation selon la revendication 9 ou 10 caractérisée en ce que ledit biopolymère polyimide dérive de la polycondensation de l'acide aspartique et/ou de l'acide glutamique ou des précurseurs dudit ou desdits acide(s).

12. Utilisation selon l'une quelconque des revendications 9 à 11 caractérisée en ce que ledit biopolymère polyimide présente une masse moléculaire moyenne en poids de l'ordre de 2000 à $10^7$.

13. Utilisation selon la revendication 12 caractérisée en ce que ledit biopolymère polyimide présente une masse moléculaire moyenne en poids de l'ordre de 3.500 à 60.000.

**14.** Utilisation selon l'une quelconque des revendications 9 à 13 caractérisée en ce que ledit biopolymère polyimide est présent en quantité allant de 0,2 à 80 % du poids de ladite composition détergente en poudre.

## Claims

**1.** Detergent composition containing a polymer and a surfactant, characterized in that the said polymer is a polyimide biopolymer possessing a charge density which can range from 0 to $5 \times 10^{-4}$ mol/g of polymer and capable of giving rise, on hydrolysis in a basic washing liquor, to an at least partially biodegradable polypeptide builder capable of acquiring in the washing bath a $COO^-$ charge density equal to at least $10^{-3}$ mol/g of polymer.

**2.** Detergent composition according to claim 1, characterized in that the said polyimide biopolymer is derived from the polycondensation of amino acids or of the precursors of the said amino acids.

**3.** Detergent composition according to claim 1 or 2, characterized in that the said polyimide biopolymer is derived from the polycondensation of aspartic acid and/or glutamic acid or of the precursors of the said acid or acids.

**4.** Detergent composition according to any one of claims 1 to 3, characterized in that the said polyimide biopolymer possesses a weight average molecular mass of the order of 2,000 to $10^7$.

**5.** Detergent composition according to claim 4, characterized in that the said polyimide biopolymer possesses a weight average molecular mass of the order of 3,500 to 60,000.

**6.** Detergent composition according to any one of claims 1 to 5, characterized in that the said polyimide biopolymer represents from 0.2 to 80 % of the weight of the said detergent composition.

**7.** Detergent composition according to claim 6, characterized in that the said polyimide biopolymer represents from 2 to 5 % of the weight of the said detergent composition.

**8.** Detergent composition according to any one of claims 1 to 7, characterized in that the surfactant is present in an amount ranging from 2 to 50 % of the weight of the said composition.

**9.** Use, in detergent compositions in powder form, of a polyimide biopolymer possessing a $COO^-$ charge density which can range from 0 to $5 \times 10^{-4}$ mol/g of polymer and capable of acquiring, on hydrolysis in a basic washing liquor, a $COO^-$ charge density equal to at least $10^{-3}$ mol/g of polymer, as a substance which generates an at least partially biodegradable polypeptide builder component.

**10.** Use according to claim 9, characterized in that the said polyimide biopolymer is derived from the polycondensation of amino diacids or of the precursors of the said amino diacids.

**11.** Use according to claim 9 or 10, characterized in that the said polyimide biopolymer is derived from the polycondensation of aspartic acid and/or glutamic acid or of the precursors of the said acid or acids.

**12.** Use according to any one of claims 9 to 11, characterized in that the said polyimide biopolymer possesses a weight average molecular mass of the order of 2,000 to $10^7$.

**13.** Use according to claim 12, characterized in that the said polyimide biopolymer possesses a weight average molecular mass of the order of 3,500 to 60,000.

**14.** Use according to any one of claims 9 to 13, characterized in that the said polyimide biopolymer is present in an amount ranging from 0.2 to 80 % of the weight of the said detergent composition in powder form.

**Patentansprüche**

1. Waschmittelzusammensetzung, umfassend ein Polymer und ein oberflächenaktives Mittel, dadurch gekennzeichnet, daß das genannte Polymer ein Polyimidbiopolymer ist, das eine Fülldichte aufweist, die 0 bis $5.10^{-4}$ Mol/g Polymer betragen kann und das geeignet ist, durch Hydrolyse in einem basischen Waschmilieu einen mindestens teilweise biodegradablen Polypeptid-Builder zu erzeugen, der geeignet ist, eine Fülldichte $COO^-$ von mindestens $10^{-3}$ Mol/g Polymer anzunehmen.

2. Waschmittelzusammensetzung nach Anspruch 1, dadurch gekennzeichnet, daß das genannte Polyimidbiopolymer von der Polykondensation von Aminosäuren oder von Vorläuferverbindungen der genannten Aminosäuren abstammt.

3. Waschmittelzusammensetzung nach Anspruch 1 oder 2, dadurch gekennzeichnet, daß das genannte Polyimidbiopolymer von der Polykondensation von Asparaginsäure und/oder Glutaminsäure oder von Vorläuferverbindungen der genannten Aminosäure(n) abstammt.

4. Waschmittelzusammensetzung nach irgendeinem der Ansprüche 1 bis 3, dadurch gekennzeichnet, daß das genannte Polyimidbiopolymer eine mittlere Molmasse in Gewicht in der Größenordnung von 2.000 bis $10^7$ aufweist.

5. Waschmittelzusammensetzung nach Anspruch 4, dadurch gekennzeichnet, daß das genannte Polyimidbiopolymer eine mittlere Molmasse in Gewicht in der Größenordnung von 3.500 bis 60.000 aufweist.

6. Waschmittelzusammensetzung nach irgendeinem der Ansprüche 1 bis 5, dadurch gekennzeichnet, daß das genannte Polyimidbiopolymer 0,2 bis 80 Gewichtsprozent der genannten Waschmittelzusammensetzung darstellt.

7. Waschmittelzusammensetzung nach Anspruch 6, dadurch gekennzeichnet, daß das genannte Polyimidbiopolymer 2 bis 5 Gewichtsprozent der genannten Waschmittelzusammensetzung darstellt.

8. Waschmittelzusammensetzung nach irgendeinem der Ansprüche 1 bis 7, dadurch gekennzeichnet, daß das oberflächenaktive Mittel in einer Menge von 2 bis 50 Gewichtsprozent der genannten Zusammensetzung vorliegt.

9. Verwendung eines Polyimidbiopolymers, das eine Fülldichte $COO^-$ aufweist, die 0 bis $5.10^{-4}$ Mol/g Polymer betragen kann und das geeignet ist, durch Hydrolyse in einem basischen Waschmilieu eine Fülldichte $COO^-$ von mindestens $10^{-3}$ Mol/g Polymer anzunehmen, in Waschmittelzusammensetzungen in Pulverform als Erzeugersubstanz für eine mindestens teilweise biodegradable Polypeptid-Builder-Verbindung.

10. Verwendung nach Anspruch 9, dadurch gekennzeichnet, daß das genannte Polyimidbiopolymer von der Polykondensation von Aminodisäuren oder von Vorläuferverbindungen der genannten Aminodisäuren abstammt.

11. Verwendung nach Anspruch 9 oder 10, dadurch gekennzeichnet, daß das genannte Polyimidbiopolymer von der Polykondensation von Asparaginsäure und/oder Glutaminsäure oder von Vorläuferverbindungen der genannten Aminosäure(n) abstammt.

12. Verwendung nach irgendeinem der Ansprüche 9 bis 11, dadurch gekennzeichnet, daß das genannte Polyimidbiopolymer eine mittlere Molmasse in Gewicht in der Größenordnung von 2.000 bis $10^7$ aufweist.

13. Verwendung nach Anspruch 12, dadurch gekennzeichnet, daß das genannte Polyimidbiopolymer eine mittlere Molmasse in Gewicht in der Größenordnung von 3.500 bis 60.000 aufweist.

14. Verwendung nach irgendeinem der Ansprüche 9 bis 13, dadurch gekennzeichnet, daß das genannte Polyimidbiopolymer 0,2 bis 80 Gewichtsprozent der genannten Waschmittelzusammensetzung in Pul-verform darstellt.

Fig. 1

FIGURE 2

lessive blanc

lessive PSI

lessive PA

14